# EUROPEAN PATENT SPECIFICATION

(11) **EP 1 161 067 B1**
(45) Date of publication and mention of the grant of the patent: **03.01.2007**
(21) Application number: 01108093.4
(22) Date of filing: 30.03.2001
(51) Int. Cl.: H04M 3/42, H04M 7/00, H04Q 3/00, H04M 3/22

(54) **System and method for detecting the presence or availability of a telephone user and publishing the number in the internet**
System und Methode um den Aufenthalt oder die Verfügbarkeit eines Telefonnutzers zu erkennen und die Rufnummer im Internet zu veröffentlichen
Système et méthode pour déterminé le lieu ou la présence d'un utilisateur de téléphone pour afficher son numéro dans l'Internet

(30) Priority: 17.05.2000 EP 00110502
(43) Date of publication of application: 05.12.2001
(73) Proprietor: International Business Machines Corporation, Armonk, NY 10504 (US)
(72) Inventor: Kleinoeder, Wolfgang B., 8805 Richterswil (CH); Truong, Hong Linh, 8805 Richterswil (DE); Heusler, Lucas A, 8055 Zurich (CH); Duponchel, Yann, 8134 Adiswil (CH); Graf, Marcel, 8802 Kilchberg (CH); Dermler, Gabriel, 8134 Adiswil (CH)
(74) Representative: Klett, Peter Michael

(56) References cited:
- WO-A-97/13382
- WO-A-99/34628
- US-A- 5 960 442
- US-B1- 6 175 616

## Description

### 1. Field of the Invention

The present invention is directed to a method and a system permitting a user of a legacy telephone system, i.e. a Public Service Telephone System (PSTN), an Integrated Service Digital Network (ISDN), or a Mobile telephony system (MTS), to publish information about his or her presence or availability in an interconnected presence system, for example and preferably to an Internet presence service.

### 2. Prior Art

In the environment of telephony there is a strong interest in making a call succeed, not only from a user's point of view - he/she wants to communicate with another user - but also from that of the service provider, i.e. the need to generate revenue. There is also an interest in preventing unsuccessful calls. Having a calling user re-dial a number again and again - either because the called user is busy or because he/she does not answer - is unproductive, because unsuccessful call attempts are usually not charged although they consume a lot of network resources.

Several supplementary services could be available to help a calling user in the cases mentioned above, such as among others, Completion of Call to Busy Subscriber (CCBS), Completion of Call on No Reply (CCNR), call back, etc.

To implement those services, the system usually monitors the status of the called user and automatically retries the call when the called user is no longer busy (in case of CCBS) or when the called user is available again (in case of CCNR).

However, there is substantially no deployment of such supplementary services in public telephone networks because these services would require complicated interaction between the users and the switches, and between the switches themselves. Even in a more modern Private Branch eXchange (PBX) environment it does happen that such services are offered only to those users that are connected to the same PBX.

"Presence" is a mode of communication that has recently become popular in the Internet. It is a service that allows a user "A" to declare his interest in the presence or availability information of another user "B". User "A" is said to subscribe to the "presence information" of user "B". The terminal of user "B" publishes "presence information" about user "B". The service delivers notifications to "A" each time the "presence information" of "B" changes.

In connection with the Internet, for example, "presence information" about a user is information about the user's presence or - in a more restricted sense - about his/her degree of availability for interaction with the telecommunication system. For example, such information may include whether or not the user is active in the Internet.

In US 5960442 an interactive directory provided for a workstation having a connected video monitor and adapted for network access has an interactive display for displaying status for individual entities, being persons and organizations. Entities are listed in the display along with status for each entity. There may be multiple fields for status, and some fields display telephone numbers, while others may provide alphanumeric display. A remote access contact address is stored and associated with each directory entity, and when the directory is active, the workstation accesses status information from network sources associated with individual directory listings. Status for entities in the directory is therefore updated in real time as the directory is used. In some embodiments multiple graphic indicia, such as underlining, shading, font choice and the like are used to provide status indication in various fields of the interactive display. In some embodiments alpha-numeric status is provided as well. In other embodiments telephone calls may be placed by interactive input to the directory.

### AIMS AND OBJECTS OF THE INVENTION

However, to the best of applicant's knowledge, it is not possible, at present, for a user of an Internet presence service to obtain similar or equivalent presence information about a user of a legacy telephone system.

Accordingly, it is an object of the invention to provide for a method and system for providing an indication of availability of a user of a legacy telephone system to a user of an interconnected presence service, e.g. an Internet presence system.

More specifically, the present invention aims at providing a method and system that permits a user of a legacy telephone system to publish information about her/his availability for communication with other users of any interconnected presence system, e.g. such that an Internet user who has subscribed to the availability information of a legacy telephone user could then be notified about the availability of such user.

### Brief Summary of the invention

This object and further advantages will achieved, according to a first general embodiment of the invention by a method of operating an availability service as specified in claim 1; preferred embodiments of the inventive method are as defined in claims 2 - 5.

According to a second general embodiment, the invention provides for a system of operating an availability service as specified in claim 6; preferred embodiments of the inventive method are as defined in claims 7 - 9.

According to a third general embodiment, the invention provides for an availability service program for implementing operation of an availability service as specified in claim 10.

### Definition of Terms and Discussion of Preferred Embodiments

Generally, legacy telephone systems collect presence information about their users but for internal purposes and without offering a presence service to their users: For example, a PSTN is able to monitor the status of a telephone line of a subscriber and determine whether the user is busy or not. The event that a telephone line goes from busy state to free state is a piece of presence information for use according to the invention. It is of interest because it indicates that during a subsequent period of time, e.g. the next couple of seconds or minutes, there is a high likelihood that the user is able to answer a call.

Further, networks for mobile telephony provide a procedure for the mobile telephones to register with the base station before the mobile telephone can make or receive a call. The network keeps track of the registration status. The fact that a mobile telephone is registered and not involved in a call also is another piece of information for use in the present invention. It is of interest because it indicates that there is a high likelihood that the user is able to answer a call.

Generally speaking, a PTSN user is either busy or not. For the present invention, a signal indicating transition from busy to not busy indicates that during a subsequent period of time τ, there is a relatively high probability that the user will answer an incoming call and is present in the sense of the invention. It should be noted, however, that the term "presence of a user" does not necessarily imply actual physical presence but, rather, an indication of "availability" of a user. This distinction is of importance because "presence" is a "digital" concept in that a user is either present, or he is not present. "Availability", on the other hand, could be said to be "graded" so that the a certain degree of a user's availability could be defined, e.g. a "high", "medium" or "low" degree of availability. For this reason, the term "availability signal" rather than "presence signal" is used herein even though both terms could be used synonymously as well.

The following terms and concepts are used herein to define the presence or availability status of a PSTN:
- "Busy": a signal indicating that the user is currently involved in a call.
- "Probably Available": a signal indicating that the user has just been involved in a call and is now free, and that it is probable that the user will answer an incoming call. This state or signal is termed a "high availability" state or signal, respectively, and will change into "availability unknown" after a certain time period "τ" as defined below. Hence,
- "Availability Unknown" is the state or signal indicating that the user has not been busy for a period of time > τ.

The time period τ is a configurable variable of the system according to the invention and can vary between minutes to hours. It is intended to characterize the fact that the longer a user is not busy, the smaller is the probability that he will be available for respond to an incoming call.

Additionally, the system or user may be provided with a means for "resetting" the user's status to "unknown"; for example, the user may generate a specific signal, e.g. dial a certain code which is reserved for that purpose.

An important advantage of the presence or availability status that can be published by means of a system or method according to the invention is that the user can influence his status via a very simple interface: he can move his status to the state "probably available" by briefly picking up his telephone handset. There is no need for typing complicated and difficult to remember access codes.

For a user of a mobile telephone system, an additional state "Unregistered" is introduced to account for the registration status of the mobile user. Preferably, a user of a mobile telephone system should be able to set to a longer value for T than a PSTN user.

### DETAILED DISCUSSION OF THE INVENTION

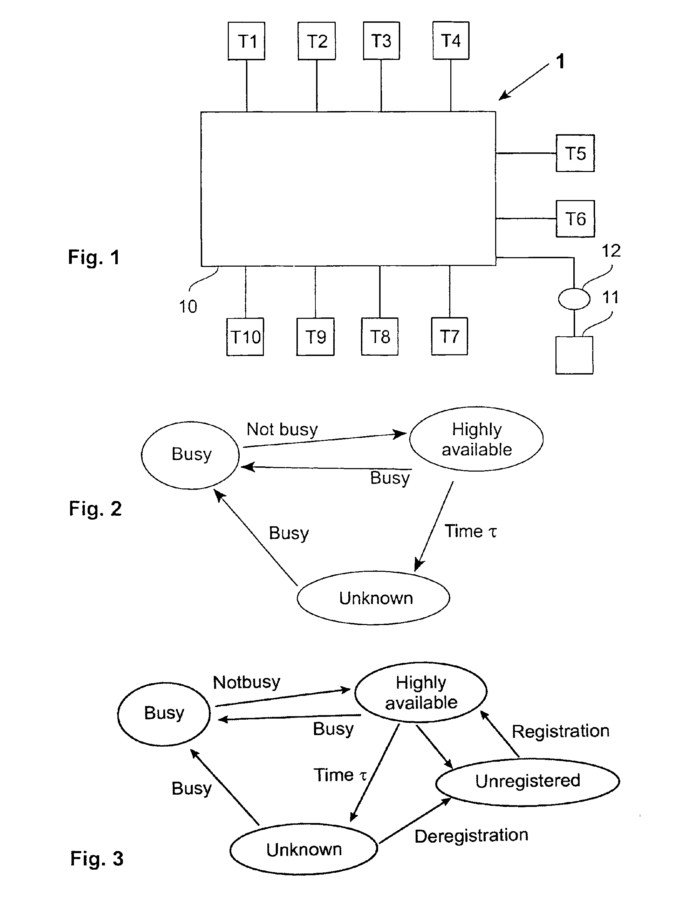

The system according to the invention for publishing presence or availability of a user of a legacy telephone system to an Internet presence service (Presence Publishing System or PPS for brevity) will now be explained in more detail with reference to the enclosed drawings in which:
Figure 1 is a diagram of a system according to the invention;
Figure 2 is a transition diagram showing the presence status of a PSTN user;
Figure 3 shows the presence status of a mobile telephone user;
Figure 4 illustrates the components of a PPS according to the present invention; and
Figure 5 illustrates a shift of the availability status.
Specifically, Fig. 1 is a diagrammatic representation of a system 1 according to the invention comprising a legacy telephone system 10. A plurality of terminals (T₁...T₁₀) is connected with legacy telephone system 1, at least some of which, e.g. T₁,T₂, are subscribers to the availability service provided by the invention. Legacy telephone system 10 is connected via a gateway 12 with at least one presence system, e.g. a presence service of an Internet.

Gateway 12 may be used to run an availability service program for implementing operation of the availability service according to the invention; this special program is designed to continuously monitor each subscriber terminal T₁,T₂ for a change of a connect status of the subscriber terminal from high availability to availability unknown and for causing transmission of a status change signal when such change happens; further the program is designed to register the pre-selected period of time τ for terminating the availability signal.

Fig. 2 shows the transition diagram of the presence status of a PSTN user while Fig. 3 shows the presence status of a mobile telephone user. A new state "Unregistered" is introduced to account for the registration status of the mobile user. Another difference is the value of τ which can be set to a longer value than the one of PSTN user.

The advantage of the presence or availability status so defined is that the user can influence his status via a very simple interface: he can move his status to the state "high availability" by picking up his telephone handset briefly, and there is no need for typing complicated and difficult to remember access codes.

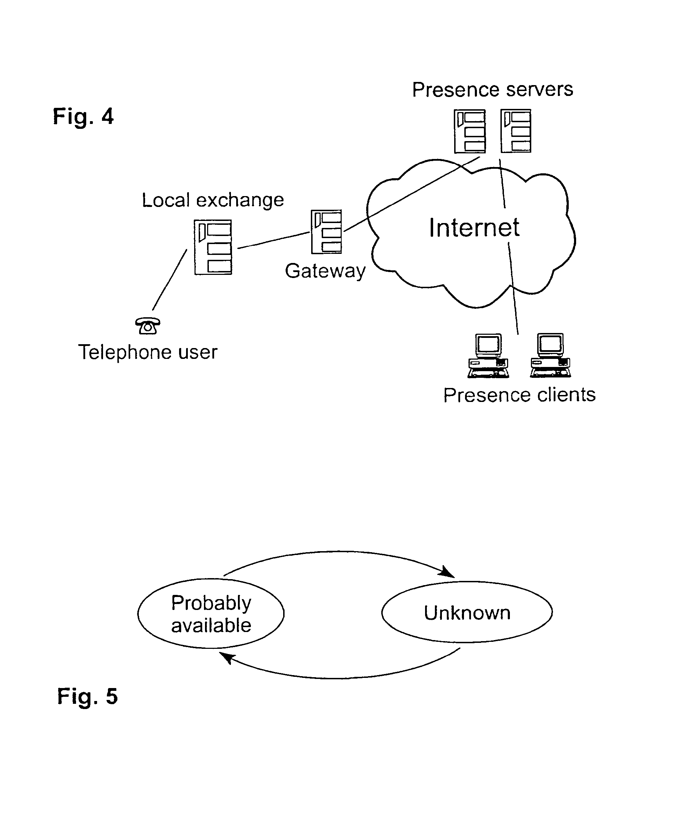

Figure 4 illustrates the components needed for publishing the presence information of a telephone user to an Internet presence service. Assuming the existence of an Internet presence service consisting of:
- multiple presence servers for the storage and distribution of presence information, and
- multiple presence clients publishing and accessing presence information to and from the server. The specification of such a presence service(s), in particular of the necessary client-server and server-server protocols, is known to those experienced in the art and needs no further elaboration. Further, reference is made to US 2001/0053213. The general essential requirement for such a presence service is that it has to be able to support the kind of presence or availability information defined herein.

Further, assuming that the local exchange - to which the subscribed telephone user is attached - is involved by providing the following functions:
- to constantly monitor the status of the telephone users attached to it, and
- to indicate to the "gateway" the events "not busy" (not active) and "busy" (active).

Based on the events received from the local exchange, the gateway will construct the presence status of a telephone user as specified in Figure 2. It is to be noted that timer is shown as being implemented in the gateway to simplify the functions of the local exchange. This, however, is not a critical requirement and the timer could well be implemented in another part of the system e.g. the module referred to above.

Furthermore, the gateway will publish that presence status to Internet presence servers, for example by using the protocols of that specific Internet presence service.

An Internet user can now use a presence client to access the presence or availability information of a legacy telephone user stored in the presence servers. Based on this information it will then decide when to make a telephone call to the telephone user, e.g. only when the telephone user is in state of "high availability".

It is to be noted further in this context that the legacy telephone user can control and determine where and by whom (or by which terminal) his presence or availability information may be observed. For example, this can be achieved by a suitable Internet presence client. The exact way of achieving this specific goal, however, is not believed to be an essential feature of the present invention.

A system similar to the one illustrated in Fig. 4 and explained above can also be defined for mobile users and could include the following differences/enhancements:
- the local exchange is replaced by the mobile switching system including the base stations;
- the presence information of a mobile user is as illustrated in Figure 3;
- the mobile switching system additionally reports to the gateway the events "registration" and "de-registration".
   The system and method according to the invention can also be implemented such that the local exchange is not involved, i.e. it is transparent to the system according to the present invention.
   The system components needed are the same as the ones in Figure 4, with the difference that the local exchange does not provide to the gateway the events "not active" (same as "not busy") and "active" (same as "busy"). Without those two pieces of information, the presence information of a telephone user needs be reduced, for example to the states illustrated in Figure 5.
   Furthermore, the telephone user himself notifies the gateway about his status change. Various means are known to those experienced in the art and the following examples represent a non-limiting selection.

### Example 1

The user just dials the gateway, hears the ringing tones for a few times and hangs up. The gateway does not answer the call, but can derive who is calling from the calling party number included in the incoming SETUP message and marks the corresponding user as "probably available". The transition to "unknown" is triggered by a time-out and/or by a special code dialed by the user.

### Example 2

The user dials the gateway, waits until the gateway answers the call, and dials (e.g. via DTMF) a certain identification code. Based on the received identification code, the gateway can determine which user to be marked as "probably available". Again the transition to the state "unknown" can be triggered by a time-out and/or by a special code dialed by the user. Furthermore from the calling number included in the SETUP message the gateway can publish to the Internet presence service the telephone number under which the user can be actually reached. Thus the method adds a certain "mobility" dimension to the service.

### Example 3

In this example, the methods of Example 1 and 2 are combined as follows: A user employs the method of Example 1 if he is at home; his home phone number is registered as default in the gateway. Otherwise, he employs the method of Example 2 if he wants to be reachable under another number.

### Example 4

An ISDN or mobile telephone user can use the SMS service to communicate with the gateway instead using the "inconvenient" DTMF method as described in example 2 above. In this case, it is possible that - in addition to his identification code - the user could also send a short message to the presence server if this feature is supported (it being noted that most current presence servers do not support that feature).

That message will then be distributed to all users who have subscribed to the presence information of the telephone user. An example for such a message is "I'm reachable only until 10:30".

It is further to be noted that the reduced presence information illustrated in Figure 4 can also be implemented by a system according to the first alternative discussed above.

In this case,
- either the gateway function is integrated into the local exchange; in this case, a user needs only to dial the special codes for enforcing the state transitions),
- or the local exchange just relays further the user's inputs to the gateway.

While the invention has been disclosed above by means of specific embodiments, it is to be emphasized that the scope of the invention is not limited to such embodiments, and that the scope of the present invention is to be construed on the basis of the attached claims.

## Claims

1. A method of operating an availability service in a telecommunication system (1) interconnecting a legacy telephone system (10) with at least one presence system (11), said legacy telephone system including a plurality of terminals (T₁...T₁₀), at least some (T₁,T₂) of which are terminals of subscribers to said availability service, said method including:
(a) continuously monitoring each subscriber terminal (T₁,T₂) for a change of a call status of said subscriber terminal from the presence of a call to the absence of a call;
(b) generating a first or "high availability" signal when said call status of said subscriber terminal changes from said presence of a call into said absence of a call;
**characterized by** further
(c) monitoring an interval of time beginning with said first signal;
(d) generating a second or "availability unknown" signal after a predetermined time period τ within said interval; and
(e) making said availability signals accessible to any interconnected presence system.

2. The method of claim 1 wherein said legacy telephone system is connected with the at least one presence system by means of a gateway (12), said method further including
(f) said gateway accepting telephone calls from said subscriber terminals; and
(g) generating said first or "high availability" signal when receiving a telephone call from said subscriber terminal.

3. The method of claim 1 wherein said legacy telephone system is connected with said at least one presence system by means of a gateway (12), said method including
(h) said gateway accepting telephone calls and receiving DTMF signals from said subscriber terminals; and
(i) generating said first or "high availability" signal when receiving a telephone call and a subscriber identification code in the form of DTMF signals from said subscriber terminal.

4. The method of claim 1 wherein said legacy telephone system is connected with said at least one presence system by means of a gateway (12), said method including
(j) said gateway accepting SMS messages from said subscriber terminals; and
(k) generating said first or "high availability" signal when receiving an SMS message from said subscriber terminal.

5. The method of any of claims 1 - 4 wherein a subscribed user of said legacy telephone system defines said predetermined time period τ within said interval.

6. A system for operating an availability service in a telecommunication system (1) interconnecting a legacy telephone system (10) with at least one presence system (11), said legacy telephone system including a plurality of terminals (T₁...T₁₀), at least some (T₁,T₂) of which are terminals of subscribers to said availability service, said system including:
(A) first means for continuously monitoring each subscriber terminal (T₁,T₂) for a change of a call status of said subscriber terminal from presence of a call into absence of a call;
(B) second means for generating a first or "high availability" signal when said call status of said subscriber terminal changes from said presence of a call status into said absence of a call status;
**characterized by**
(C) third means for monitoring an interval of time beginning with said first signal; and
(D) fourth means for generating a second or "unknown availability" signal after a predetermined time period τ within said interval.

7. The system according to claim 6, further comprising
(E) fifth means for making said availability signal accessible to any interconnected presence system.

8. The system of claim 7, wherein at least one gateway (12) is provided for connecting said legacy telephone system (10) with any interconnected presence system (11).

9. The system of claim 8 wherein said gateway (12) includes a program for implementing said availability service.

10. An availability service program for implementing operation of an availability service in a telecommunication system (1) interconnecting a legacy telephone system (10) with at least one presence system (11), said legacy telephone system including a plurality of terminals (T₁...T₁₀), at least some (T₁,T₂) of which are terminals of subscribers to said availability service, said program being designed to continuously monitor the presence or absence of a call for each subscriber terminal (T₁,T₂), to generate a "high availability" signal when a call terminates and **characterized by** said program being further designed to generate a "unknown availability" signal at the end of a predetermined period of time τ.

## Patentansprüche

1. Verfahren zum Betreiben eines Verfügbarkeitsnachweisdienstes in einem Telekommunikationssystem (1), das ein herkömmliches Telefonsystem (10) mit mindestens einem Aufenthaltsnachweissystem (11) verbindet, wobei das herkömmliche Telefonsystem eine Vielzahl von Anschlüssen (T₁ ... T₁₀) beinhaltet, von denen mindestens einige (T₁, T₂) Anschlüsse von Teilnehmern des Verfügbarkeitsnachweisdienstes sind, wobei das Verfahren Folgendes beinhaltet:
(a) kontinuierliches Überwachen jedes Teilnehmeranschlusses (T₁, T₂) bezüglich des Änderns eines Anrufstatus des Teilnehmeranschlusses vom Vorliegen eines Anrufs zum Nichtvorliegen eines Anrufs;
(b) Generieren eines ersten Signals bzw. eines Signals "hohe Verfügbarkeit", wenn sich der Anrufstatus des Teilnehmeranschlusses vom Vorliegen eines Anrufs zum Nichtvorliegen eines Anrufs ändert;
**gekennzeichnet** ferner durch
(c) Überwachen eines Zeitintervalls, das mit dem ersten Signal beginnt;
(d) Generieren eines zweiten Signals bzw. eines Signals "Verfügbarkeit unbekannt", nach einem vorgegebenen Zeitraum τ innerhalb des Intervalls; und
(e) Bereitstellung der Verfügbarkeitssignale für ein angeschlossenes Aufenthaltsnachweissystem.

2. Verfahren nach Anspruch 1, bei dem das herkömmliche Telefonsystem durch einen Gateway (12) mit mindestens einem Aufenthaltsnachweissystem verbunden ist, wobei das Verfahren ferner Folgendes beinhaltet:
(f) Empfangen von Telefonanrufen durch den Gateway von den Teilnehmeranschlüssen; und
(g) Generieren des ersten Signals bzw. des Signals "hohe Verfügbarkeit", wenn von dem Teilnehmeranschluss ein Telefonanruf empfangen wird.

3. Verfahren nach Anspruch 1, bei dem das herkömmliche Telefonsystem durch einen Gateway (12) mit mindestens einem Aufenthaltsnachweissystem verbunden ist, wobei das Verfahren Folgendes beinhaltet:
(h) Empfangen von Telefonanrufen und Empfangen von DTMF-Signalen durch den Gateway von den Teilnehmeranschlüssen; und
(i) Generieren des ersten Signals bzw. des Signals "hohe Verfügbarkeit", wenn ein Telefonanruf und ein Teilnehmerkennungscode in Form von DTMF-Signalen von dem Teilnehmeranschluss empfangen werden.

4. Verfahren nach Anspruch 1, bei dem das herkömmliche Telefonsystem durch einen Gateway (12) mit mindestens einem Aufenthaltsnachweissystem verbunden ist, wobei das Verfahren Folgendes beinhaltet:
(j) Empfangen von SMS-Nachrichten durch den Gateway von den Teilnehmeranschlüssen; und
(k) Generieren des ersten Signals bzw. des Signals "hohe Verfügbarkeit", wenn eine SMS-Nachricht von dem Teilnehmeranschluss empfangen wird.

5. Verfahren nach einem der Ansprüche 1 bis 4, bei dem ein Teilnehmer des herkömmlichen Telefonsystems den vorgegebenen Zeitraum τ innerhalb des Intervalls definiert.

6. System zum Betreiben eines Verfügbarkeitsnachweisdienstes in einem Telekommunikationssystem (1), das ein herkömmliches Telefonsystem (10) mit mindestens einem Aufenthaltsnachweissystem (11) verbindet, wobei das herkömmliche Telefonsystem eine Vielzahl von Anschlüssen (T₁ ... T₁₀) beinhaltet, von denen mindestens einige (T₁, T₂) Anschlüsse von Teilnehmern des Verfügbarkeitsnachweisdienstes sind, wobei das System Folgendes beinhaltet:
(A) erste Mittel zum kontinuierlichen Überwachen jedes Teilnehmeranschlusses (T₁, T₂) bezüglich des Änderns eines Anrufstatus des Teilnehmeranschlusses vom Vorliegen eines Anrufs zum Nichtvorliegen eines Anrufs;
(B) zweite Mittel zum Generieren eines ersten Signals bzw. eines Signals "hohe Verfügbarkeit", wenn sich der Anrufstatus des Teilnehmeranschlusses vom Status Vorliegen eines Anrufs zum Status Nichtvorliegen eines Anrufs ändert; **gekennzeichnet durch**
(C) dritte Mittel zum Überwachen eines Zeitintervalls, das mit dem ersten Signal beginnt; und
(D) vierte Mittel zum Generieren eines zweiten Signals bzw. eines Signals "Verfügbarkeit unbekannt" nach einem vorgegebenen Zeitraum τ innerhalb des Intervalls.

7. System nach Anspruch 6, das ferner Folgendes umfasst:
(E) fünfte Mittel zur Bereitstellung des Verfügbarkeitssignals für ein angeschlossenes Aufenthaltsnachweissystem.

8. System nach Anspruch 7, bei dem der mindestens eine Gateway (12) zum Verbinden des herkömmlichen Telefonsystems (10) mit einem angeschlossenen Aufenthaltsnachweissystem (11) vorgesehen ist.

9. System nach Anspruch 8, bei dem der Gateway (12) ein Programm zum Implementieren des Verfügbarkeitsnachweisdienstes beinhaltet.

10. Programm für einen Verfügbarkeitsnachweisdienst zum Implementieren eines Verfügbarkeitsnachweisdienstes in einem Telekommunikationssystem (1), das ein herkömmliches Telefonsystem (10) mit mindestens einem Aufenthaltsnachweissystem (11) verbindet, wobei das herkömmliche Telefonsystem eine Vielzahl von Anschlüssen (T₁ ... T₁₀) beinhaltet, von denen mindestens einige (T₁, T₂) Anschlüsse von Teilnehmern des Verfügbarkeitsnachweisdienstes sind, wobei das Programm so ausgelegt ist, dass es für jeden Teilnehmeranschluss (T₁, T₂) kontinuierlich das Vorliegen oder das Nichtvorliegen eines Anrufs überwacht, um ein Signal "hohe Verfügbarkeit" zu generieren, wenn ein Anruf beendet wird, wobei das Programm ferner **dadurch gekennzeichnet ist, dass** es am Ende eines vorgegebenen Zeitraums τ ein Signal "Verfügbarkeit unbekannt" generiert.

## Revendications

1. Procédé de mise en oeuvre d'un service de disponibilité dans un système de télécommunication (1) interconnectant un système téléphonique traditionnel (10) avec au moins un système de présence (11), ledit système téléphonique traditionnel comprenant une pluralité de terminaux (T₁ ... T₁₀), dont au moins certains (T₁, T₂) sont des terminaux d'abonnés dudit service de disponibilité, ledit procédé comprenant les étapes consistant à :
(a) surveiller en continu chaque terminal d'abonné (T₁, T₂) pour détecter un passage de l'état d'appel dudit terminal d'abonné de la présence d'un appel à l'absence d'un appel,
(b) générer un premier signal ou signal de "haute disponibilité" lorsque ledit état d'appel dudit terminal d'abonné passe de ladite présence d'un appel à ladite absence d'un appel,
**caractérisé en outre par** les étapes consistant à
(c) surveiller un intervalle de temps commençant avec ledit premier signal,
(d) générer un second signal ou signal de "disponibilité inconnue" après un intervalle de temps prédéterminé τ à l'intérieur dudit intervalle, et
(e) rendre lesdits signaux de disponibilité accessibles à tout système de présence interconnecté.

2. Procédé selon la revendication 1, dans lequel ledit système téléphonique traditionnel est connecté audit au moins un système de présence au moyen d'une passerelle (12), ledit procédé comprenant en outre
(f) le fait que ladite passerelle accepte des appels téléphoniques desdits terminaux d'abonnés,
(g) la génération dudit premier signal ou signal de "haute disponibilité" lors de la réception d'un appel téléphonique dudit terminal d'abonné.

3. Procédé selon la revendication 1, dans lequel ledit système téléphonique traditionnel est connecté audit au moins un système de présence au moyen d'une passerelle (12), ledit procédé comprenant
(h) le fait que ladite passerelle accepte des appels téléphoniques et reçoive des signaux DTMF desdits terminaux d'abonnés, et
(i) la génération dudit premier signal ou signal de "haute disponibilité" lors de la réception d'un appel téléphonique et d'un code d'identification d'abonné sous la forme de signaux DTMF dudit terminal d'abonné.

4. Procédé selon la revendication 1, dans lequel ledit système téléphonique traditionnel est connecté audit au moins un système de présence au moyen d'une passerelle (12), ledit procédé comprenant
(j) le fait que ladite passerelle accepte des messages SMS provenant desdits terminaux d'abonnés, et
(k) la génération dudit premier signal ou signal de "haute disponibilité" lors de la réception d'un message SMS dudit terminal d'abonné.

5. Procédé selon l'une quelconque des revendications 1 à 4, dans lequel un utilisateur abonné dudit système téléphonique traditionnel définit ledit intervalle de temps prédéterminé τ à l'intérieur dudit intervalle.

6. Système destiné à mettre en oeuvre un système de disponibilité dans un système de télécommunication (1) interconnectant un système téléphonique traditionnel (10) avec au moins un système de présence, ledit système téléphonique traditionnel comprenant une pluralité de terminaux (T₁, ... T₁₀) dont au moins certains (T₁, T₂) sont des terminaux d'abonnés dudit service de disponibilité, ledit système comprenant :
(A) un premier moyen destiné à surveiller continuellement chaque terminal d'abonné (T₁, T₂) pour détecter le passage d'un état d'appel dudit terminal d'abonné de la présence d'un appel à l'absence d'un appel,
(B) un second moyen destiné à générer un premier signal ou signal de "haute disponibilité" lorsque ledit état d'appel dudit terminal d'abonné passe dudit état de présence d'un appel audit état d'absence d'un appel,
**caractérisé par**
(C) un troisième moyen destiné à surveiller un intervalle de temps commençant avec ledit premier signal, et
(D) un quatrième moyen destiné à générer un second signal ou signal de "disponibilité inconnue" après un intervalle de temps prédéterminé τ à l'intérieur dudit intervalle.

7. Système selon la revendication 6, comprenant en outre
(E) un cinquième moyen destiné à rendre ledit signal de disponibilité accessible à tout système de présence interconnecté.

8. Système selon la revendication 7, dans lequel au moins une passerelle (12) est prévue pour connecter ledit système téléphonique traditionnel (10) à tout système de présence interconnecté (11).

9. Système selon la revendication 9, dans lequel ladite passerelle (12) comprend un programme destiné à mettre en oeuvre ledit service de disponibilité.

10. Programme de service de disponibilité destiné à mettre en oeuvre le fonctionnement d'un service de disponibilité dans un système de télécommunication (1) interconnectant un système téléphonique traditionnel (10) avec au moins un système de présence (11), ledit système téléphonique traditionnel comprenant une pluralité de terminaux (T₁, ... T₁₀), dont au moins certains (T₁, T₂) sont des terminaux d'abonnés dudit service de disponibilité, ledit programme étant conçu pour surveiller en continu la présence ou l'absence d'un appel pour chaque terminal d'abonné
(T₁, T₂), pour générer un signal de "haute disponibilité" lorsqu'un appel s'achève et **caractérisé par le fait que** ledit programme étant en outre conçu pour générer un signal de "disponibilité inconnue" à la fin d'un intervalle de temps prédéterminé τ
